# EUROPEAN PATENT SPECIFICATION

(11) **EP 3 078 091 B1**
(45) Date of publication and mention of the grant of the patent: **21.06.2017**
(21) Application number: 14777200.8
(22) Date of filing: 08.07.2014
(51) Int. Cl.: H02B 1/056, H01R 31/08, H02B 3/00, H02G 5/08, H01R 9/24

(54) **AN OUTLET BOX HAVING BRIDGING MODULE**
ABGANGSKASTEN MIT ÜBERBRÜCKUNGSMODUL
BOÎTIER DE DÉPART AVEC MODULE DE PONTAGE

(30) Priority: 07.12.2013 TR 201314365
(43) Date of publication of application: 12.10.2016
(73) Proprietor: EAE Elektrik Asansör Endüstrisi Insaat Sanayi ve Ticaret Anonim Sirketi, Istanbul (TR)
(72) Inventor: VOSKI, Vedat, Buyukçekmece (TR)
(74) Representative: Dereligil, Ersin
(86) International application number: PCT/TR2014/000242
(87) International publication number: WO 2015/084275

(56) References cited:
- GB-A- 940 228
- JP-A- H11 213 854
- US-A- 2 970 245

## Description

### Technical Field

The invention relates to an outlet box which gives output current through the power point of an electric distribution system with busbars.

The invention more particularly relates to an outlet box having bridging module which allows the replacement of circuit components on the circuit in the safest manner possible, without cutting off the electric current.

### Prior Art

Within the state of the art, outlet boxes which give output current through the power point of electric distribution systems with busbars are used. For example, the outlet boxes used on electric distribution systems with busbars in data centers may be cited. In these outlet boxes, it is highly important that the continuity of the electricity is provided, without any interruption. In current application used today, the outlet box on the distribution module with busbar draws current from the busbar carrying current thereon by means of current drawing contacts; wherein the current is cut off for the replacement of load isolator and disconnector, which, in turn, is an undesired situation. Or alternatively, the cables are mounted under load in an unsafe manner, and the load isolator or disconnector remaining therebetween is replaced again while there is power thereon. This, in turn, is a very risky operation in terms of loss of life and property.

A patent application numbered US2970245A is related with bus duct structures for electrical distribution systems and, more particularly to bus duct structures of the plug-in type. However, this application is not offering any solution of replacement of circuit components without cutting off the electric current. On the other hand changing components while there is current on the circuit is very dangerous given the health risk of executing person and burning other electric components on the same circuit.

JP 411213854A describes a bypass breaker with lead wires intended to be connected to the lead-in wires of both ends of a fuse to be exchanged without cutting off the current. As a result, due to the aforementioned drawbacks and insufficiency of the current solutions regarding the subject matter, a development in the related technical field has become necessary.

### Object of the Invention

The invention, inspired by the existing conditions, aims to solve the aforementioned drawbacks.

The main object of the invention is to develop an outlet box which is used for giving output current through the power point of an electric distribution system with busbars and allows the replacement of circuit components on the circuit in the safest manner possible, without cutting off the electric current.

Another object of the invention is to allow the protective circuit components operating as the load isolator or disconnector to be replaced under load in the safest manner possible.

Another object of the invention is to shorten the duration of the operations thanks to the fact that secondary processes like mounting/dismounting the cable are no longer required owing to the outlet box according to the invention. Moreover, the cost of the operation is lowered since parallel cables are not needed.

Yet another object of the invention is to eliminate the risk of electric shock to the operator thanks to the solution provided by the outlet box according to the invention, this risk being high in the state of the art because the operation is performed under load.

In order to achieve the aforementioned objects, an outlet box according to claim 1 has been developed;

In a preferred embodiment of the invention, a conductor and a fuse connected with said conductor are disposed on the bridge handle.

In a preferred embodiment of the invention, a warning light indicating that the current is flowing over the bridge handle is integrated in the bridge handle.

In a preferred embodiment of the invention, plastic, protective, and conductive blade groups are mounted in the inlet and outlet sections of the protective circuit component.

In a preferred embodiment of the invention, the blade group comprises conductive terminals connected in the protective circuit component.

In a preferred embodiment of the invention, the blade group comprises contact connecting terminals engaged in the bridge contacts of said bridge contact group.

In a preferred embodiment of the invention, a plastic protection group is used for isolating the bridge contacts of the bridge contact group from the external environment.

In a preferred embodiment of the invention, plastic limiting elements are formed on the plastic protection group.

In a preferred embodiment of the invention, the bridge handle is configured in the form of cable.

In a preferred embodiment of the invention, the conductive terminals may be of male or female structure.

In a preferred embodiment of the invention, the bridge contacts may be of male or female structure.

### Description of the Figures

Fig. 1 is the overall side view of the outlet box according to the invention when the groups thereof are dismounted.
Fig. 2a is the side view of the blade group and protective circuit component when dismounted.
Fig. 2b is the side view of the blade group and protective circuit component when mounted.
Fig. 2c is the perspective view of the blade group and protective circuit component when mounted.
Fig. 2d is the perspective view of the blade group.
Fig. 3a is the perspective view of the paralleling group.
Fig. 3b is the perspective view of an alternative embodiment of the paralleling group.
Fig. 4 is the perspective view of the bridge contact group.
Fig. 5 is the side view of the plastic protection group.
Fig. 6 is the side view showing the connection and operating mode of the protective circuit component.
Fig. 7 is the side view showing the connection of the paralleling group to the system.
Fig. 8 is the side view showing the state when the protective circuit component and paralleling group are parallel to the system.
Fig. 9 is the side view showing the connection and operating mode of the paralleling group when the protective circuit component is dislocated from the system.
Fig. 10 is the perspective view of an alternative embodiment of the paralleling group.
Fig. 11 is the perspective view of an alternative embodiment of the bridge contact group.
Fig. 12 is the overall side view of an alternative embodiment of the invention.
Fig. 13 is the schematic side view of the outlet box of prior art.
Fig. 14 is the schematic side view showing the parallel cable connection of the outlet box of prior art.
Fig. 15 is the schematic side view of the outlet box of prior art while the protective circuit component is operating.

### Description of the Reference Numerals

- 1.: Protective circuit component
- 2.: Outlet box body
- 3.: Outlet box lid
- 4.: Bush
- 5.: Distribution module with busbar
- 6.: Conductive busbar
- 7.: Current drawing contact
- 8.: Outlet cable
- 9.: Parallel cable

- K.: Blade group
K1. Conductive terminal
K2. Contact connecting terminal
- H.: Paralleling group
H1. Conductive terminal
H2. Bridge handle
H3. Conductor
H4. Fuse
H5. Warning light
- M.: Bridge contact group
M1. Electrical terminal
M2. Clamping screw
M3. Bridge contact 1
M4. Bridge contact 2
- P.: Plastic protection group
P1. Plastic limiting element 1
P2. Plastic limiting element 2
I0, I1, I2: Current values

### Detailed Description of the Invention

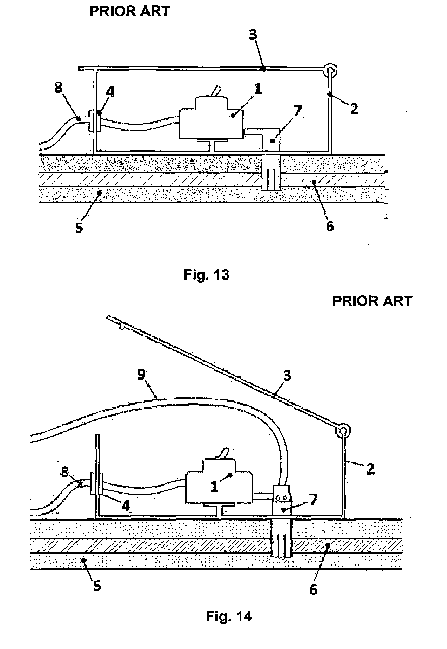

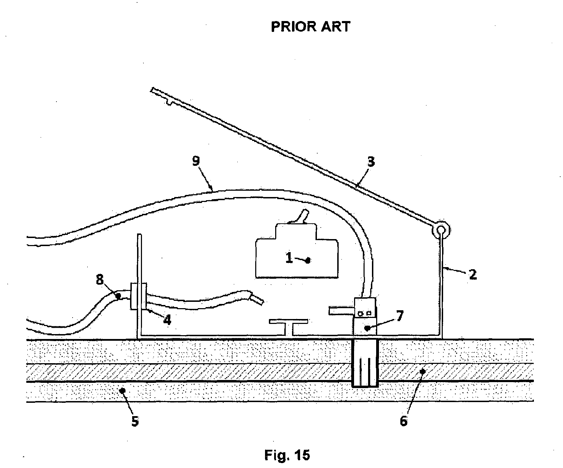

Figs. 13, 14, and 15 show the schematic side views of the outlet box of prior art. In current application, the outlet box which consists of the outlet box body (2) and outlet box lid (3) disposed on the distribution module with busbar (5) draws current from the conductive busbar (6) by means of the current drawing contacts (7). In order to replace the protective circuit component (1) inside the outlet box, either the current is cut off, which, in turn, is an undesired situation, or, as seen in Fig. 14, the cables (9) are mounted under load in an unsafe manner, and the protective circuit component (1) remaining therebetween is replaced again while there is power thereon. This, in turn, is a very risky operation in terms of loss of life and property.

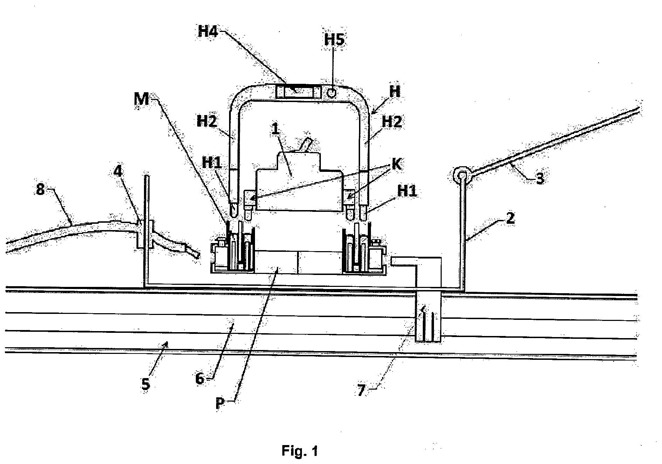

In Fig. 1, the overall side view of the outlet box according to the invention when the groups thereof are dismounted, is given. The outlet box according to the invention comprises a distribution module (5) with busbar; a conductive busbar (6) provided on the distribution module with busbar; an outlet box body (2) having the respective parts and groups therein, an outlet box lid (3) which is connected with the outlet box body (2) in an openable/closable manner; a current drawing contact (7) which draws current from the conductive busbar (6); and a protective circuit component (1) which is used for disconnecting or separating the circuit, or providing thermal magnetic protection against short-circuit currents.

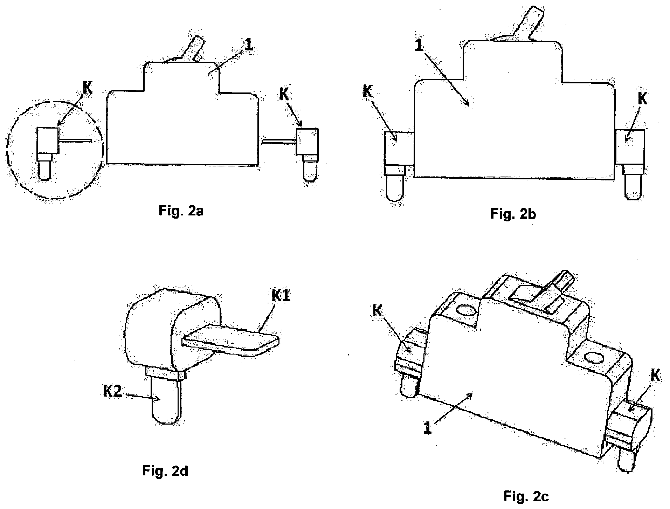

In the outlet box according to the invention, unlike the prior art, plastic, protective, and conductive blade groups (K) are mounted in the inlet and outlet sections of the protective circuit component (1), instead of cables. In Figs. 2a, 2b, and 2c, the connection mode of the blade groups and protective circuit component is shown. As seen in Fig. 2d, the conductive terminals (K1) of the blade group (K) are connected within the protective circuit component (1).

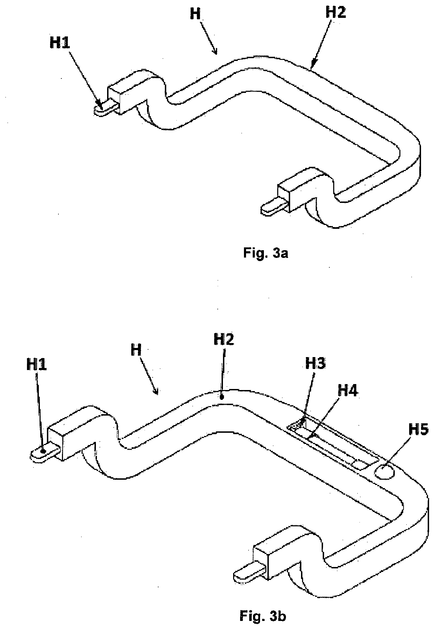

In Fig. 3a, the perspective view of the paralleling group (H) which receives the main current thereon in order not to cut off the current during the replacement of the protective circuit component (1), is given. The paralleling group (H) comprises a U-shaped bridge handle (H2) and conductive terminals (H1) configured in the end portion of the bridge handle (H2).

In Fig. 3b, on the other hand, the perspective view of an alternative embodiment of the paralleling group (H) is given. In the alternative embodiment, a conductor (H3), a fuse (H4) connected with said conductor (H3), and a warning light (H5) indicating that the current is flowing over the bridge handle (H2) are integrated in the bridge handle (H2).

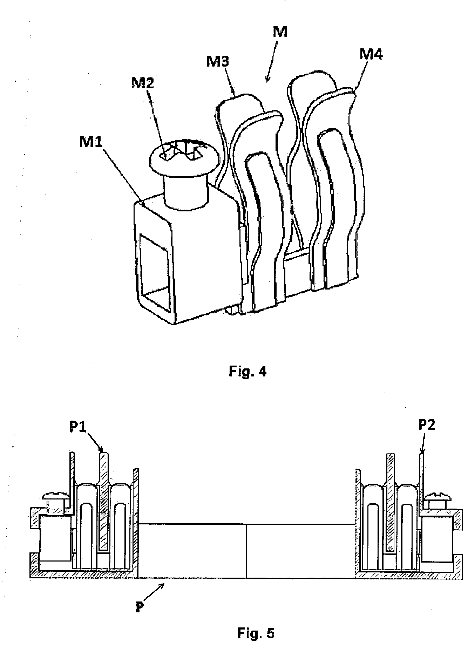

The perspective view of the bridge contact group (M) is given in Fig. 4. The bridge contact group (M) and the paralleling group (H) are referred to as bridging module in this detailed description. The cables and conductors getting to the inlet and outlet sections of the protective circuit component (1) are connected to the electrical terminal (M1) of this bridge contact group (M), instead of the protective circuit component (1). This connection is provided by a clamping screw (M2). Further, the bridge contact 1 s (M3) where the conductive terminals (H1) of the paralleling group (H) are engaged and the bridge contact 2s (M4) where the contact connecting terminals (K2) of the blade group (K) are engaged are also provided in the bridge contact group (M).
The side view of the plastic protection group (P) is given in Fig. 5. The plastic protection group (P) isolates the bridge contact 1s (M3) and bridge contact 2s (M4) belonging to the bridge contact group (M), from the external environment.

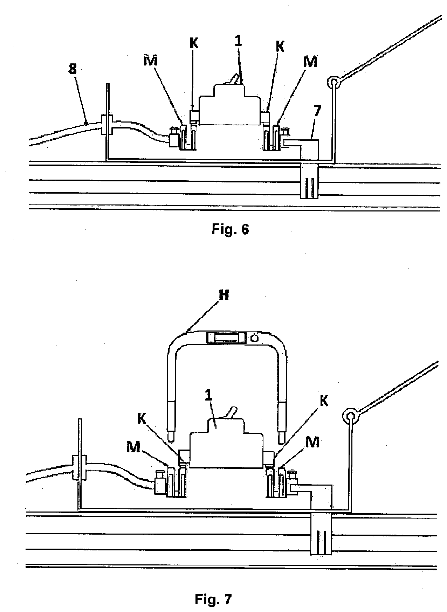

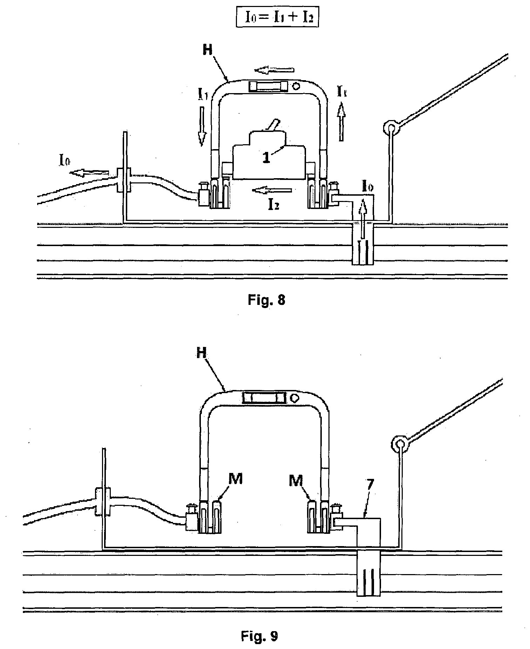

In Fig. 6, the side view showing the connection and operating mode of the protective circuit component (1) is given. In Fig. 7, the side view showing the connection of the paralleling group (H) to the system is given. In Fig. 8, the side view showing the state when the protective circuit component (1) and paralleling group (H) are parallel to the system, is given. And in Fig. 9, the side view showing the connection and operating mode of the paralleling group (H) when the protective circuit component (1) is dislocated from the system, is given. The steps performed for dislocating the protective circuit component (1) belonging to the outlet box according to the invention from the system in a safe manner are explained in detail below.
First, the outlet box lid (3) is opened. In the meantime, there is still voltage therein and the current is not cut off. Afterwards, the conductive terminals (H1) belonging to the paralleling group (H) are anchored in the bridge contact 1 s (M3) of the bridge contact group (M). Again, the warning light (H5) on the bridge handle (H2) belonging to the paralleling group (H) is on, indicating that the current is flowing over the bridge handle (H2). If the light is off, either the fuse (H4) is blown, or the conductive terminals (H1) are not properly fitted. Due to the geometry of the conductive terminals (H1), there is the likelihood that they are engaged in the wrong place. The conductive terminals (H1) must only be anchored in the bridge contact 1s (M3). Due to the limits in the plastic limiting elements (P1, P2) configured on the plastic protection group (P), they are made narrow enough to be introduced into this area. Afterwards, the protective circuit component (1) is displaced manually. Thus, the contact between the conductive contact connecting terminals (K2) of the blade groups (K) and the bridge contact 2s (M4) of the bridge contact group (M) is interrupted and the protective circuit component (1) is removed in an unloaded manner. In the meantime, the bridge handle (H2) anchored in the bridge contact 1s (M3) of the bridge contact group (M) prevents the current from being cut off. The blade groups (K) are still mounted on the protective circuit component (1) having been removed. These are dismounted and then engaged in the new protective circuit component (1). Afterwards, the new protective circuit component (1) is mounted back in the corresponding area. Later, the paralleling group (H) is dislocated and the replacement process is completed. The present system can be applied without the conductor (H3), fuse (H4), and the warning light (H5) on the paralleling group (H).

The method steps performed respectively with the outlet box according to the invention are given below.
▪ The conductive terminals (H1) configured in the end portion of the bridge handle (H2) of the paralleling group (H) are anchored in the bridge contact 1s (M3) of the bridge contact group (M) and the warning light (H5) on the bridge handle (H2) is watched to be switched on.
▪ Protective circuit component (1) is displaced.
▪ The blade groups (K) are removed from the protective circuit component (1) and they are mounted in the new protective circuit component (1).
▪ The new protective circuit component (1) is mounted in the corresponding area.
▪ Finally, the paralleling group (H) is dislocated.

The system according to the invention can be used in installation and special circuit applications, e.g. in electric distribution boxes, junction boxes, and electric cabinets.

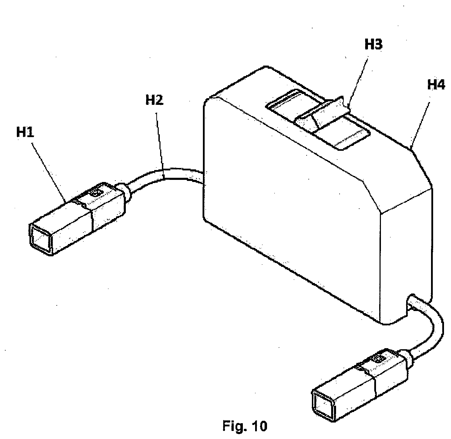

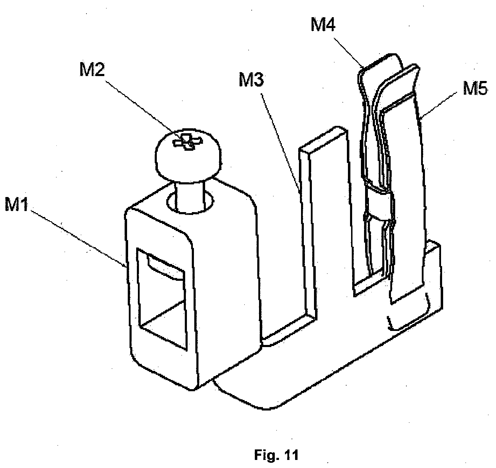

In Fig. 10, the perspective view of an alternative embodiment of the paralleling group (H) is given. In this alternative version, female conductive terminals (contacts) (H1) are formed on the paralleling group (H). Said female conductive terminals (contacts) (H1) are introduced into the bridge contacts (M3) of male structure, which are shown in Fig. 11 as an alternative embodiment. Unlike the embodiment mentioned in the detailed description above, female conductive terminals (contacts) (H1) are configured on the paralleling group (H), wherein these conductive terminals (H1) are introduced into the bridge contacts (M3) of an alternative male structure disposed on the bridge contact group (M).

Further, as seen in Fig. 10, unlike the embodiments given in Figs. 3a and 3b, the bridge handles (H2) of the paralleling group (H) are configured in the form of a cable, not as a solid part. The female conductive terminals (contacts) (H1) are integrated in the end portions of said cables. However, there are alternative embodiments where conductive terminals (H1) are of male or female structure and bridge contacts (M3) are also of male or female structure, and so it is obvious that all alternative embodiments are covered within the scope of the invention.

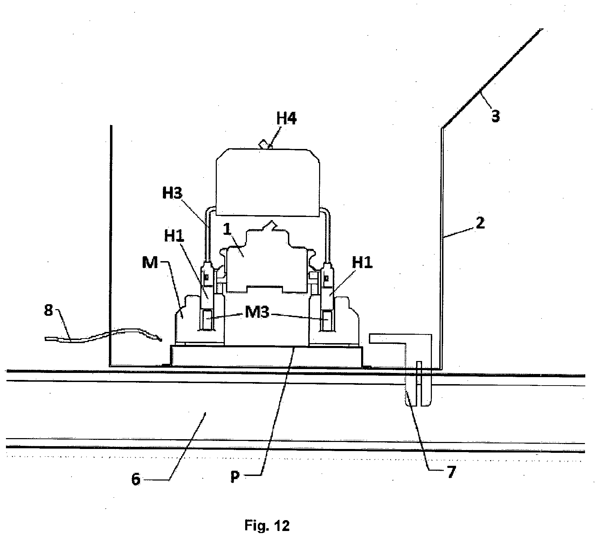

In Fig. 12, the overall side view of an alternative embodiment of the invention is given. As seen in this figure, the paralleling group (H) is of a cable structure; wherein the conductive terminals (H1) of female structure formed in the end portion of the cable are inserted in the bridge contacts (M3) of male structure disposed on the bridge contact group (M). However, the operating principle of the whole configuration is performed as explained in the above detailed description.

## Claims

1. An outlet box for giving output current through the power point of an electric distribution system that comprises:
- a distribution module (5) with busbar,
- a conductive busbar (6) disposed on the distribution module (5) with busbar,
the outlet box comprising:
- an outlet box body (2),
- an outlet box lid (3) connected to the outlet box body (2) in an openable/closable manner,
- a current drawing contact (7) drawing current from the conductive busbar (6),
- a protective circuit component (1) which is used for disconnecting or separating the circuit, or providing thermal magnetic protection against short-circuit currents,
the outlet box **characterized by** comprising;
- two bridge contact groups (M) each comprising;
• an electrical terminal (M1) where the cables and conductors coming to the inlet and outlet sections of the protective circuit component (1) are engaged instead of the protective circuit component (1) itself,
• a bridge contact 1 (M3) configured to be engaged by the conductive terminals (H1) of a paralleling group (H)
• a bridge contact 2 (M4) where the contact connecting terminals (K2) of a blade group (K) of the protective circuit component (1) is connected.
- a paralleling group (H) configured to be connected to the bridge contact groups (M) during the replacement of protective circuit component (1) and to receive the main current thereon in order not to cut off the current and comprising a bridge handle (H2) and conductive terminals (H1) configured in the end portions of the bridge handle (H2).

2. The outlet box according to Claim 1, **characterized in** comprising a conductor (H3) integrated in the bridge handle (H2) and a fuse (H4) integrated in the bridge handle (H2).

3. The outlet box according to Claim 1, **characterized in** comprising a warning light (H5) which is integrated in the bridge handle (H2) and indicates that the current is flowing over the bridge handle (H2).

4. The outlet box according to Claim 1, **characterized in** comprising plastic, protective, and conductive blade groups (K) mounted in the inlet and outlet sections of the protective circuit component (1).

5. The outlet box according to Claim 4, **characterized in that** the blade group (K) comprises
- conductive terminals (K1) connected in the protective circuit component (1),
- contact connecting terminals (K2) engaged in bridge contact 2s (M4) of the bridge contact group (M).

6. The outlet box according to Claim 1, **characterized in** comprising
- a plastic protection group (P) isolating the bridge contact 1s (M3) and bridge contact 2s (M4) belonging to the bridge contact group (M), from the external environment.

7. The outlet box according to Claim 6, **characterized in** comprising
- plastic limiting elements (P1, P2) configured on the plastic protection group (P).

8. The outlet box according to Claim 1, **characterized in that** the bridge handle (H2) is cable.

9. The outlet box according to Claim 1, **characterized in that** the conductive terminals (H1) are of a male or female structure.

10. The outlet box according to Claim 1, **characterized in that** the bridge contacts (M3) are of a male or female structure.

## Patentansprüche

1. Ein Austrittskasten zum Erzeugen eines Ausgangsstroms durch den Leistungspunkt eines elektrischen Verteilungssystems, das umfasst:
Ein Verteilungsmodul (5) mit Sammelschiene,
Eine auf dem Verteilungsmodul (5) mit Sammelschiene angeordnete leitfähige Sammelschiene (6)
Wobei der Austrittskasten folgendes umfasst:
Einen Austrittskastenkörper (2),
Einen mit dem Austrittskastenkörper (2) verbundenen Austrittskastendeckel (3) in einer öffenbaren / schließbaren Weise,
Einen Stromzugkontakt (7), der Strom von der leitfähigen Stromschiene (6) zieht,
Eine Schutzschaltungskomponente (1), die zum Trennen oder Trennen der Schaltung verwendet wird oder einen thermischen magnetischen Schutz gegen Kurzschlussströme bereitstellt,
der Austrittskasten ist **dadurch gekennzeichnet ist, daß**;
Zwei Brückenkontaktgruppen (M) vorhanden sind, die jeweils folgendes umfassen;
• eine elektrische Klemme (M1), an der die an die Ein- und Auslassabschnitte des Schutzschaltkreiskomponenten (1) kommenden Kabel und Leiter anstelle des Schutzschaltkreiskomponenten (1) selbst angreifen,
• einen Brückenkontakt 1 (M3), der durch die leitfähigen Anschlüssen (H1) einer Parallelschaltung (H) konfiguriert ist,
• einen Brückenkontakt 2 (M4), an dem die Kontaktanschlussklemmen (K2) einer Klingengruppe (K) des Schutzschaltkreiskomponenten (1) angeschlossen sind.
• Eine Parallelschaltung (H), die so konfiguriert ist, dass sie während des Austausches der Schutzschaltungskomponente (1) mit den Brückenkontaktgruppen (M) verbunden ist und den Hauptstrom empfängt, um den Strom nicht abzuschneiden und einen Brückengriff (H2) und leitfähige Anschlüsse (H1) zu umfassen, die in den Endabschnitten des Brückengriffes (H2) ausgebildet sind.

2. Austrittskasten nach Anspruch 1, **dadurch gekennzeichnet, daß** er einen in den Brückengriff (H2) integrierten Leiter (H3) und eine im Brückengriff (H2) integrierte Sicherung (H4) aufweist.

3. Austrittskasten nach Anspruch 1, **dadurch gekennzeichnet, daß** er eine im Brückengriff (H2) integrierte Warnleuchte (H5) aufweist, die anzeigt, daß der Strom über den Brückengriff (H2) fließt.

4. Austrittskasten nach Anspruch 1, **dadurch gekennzeichnet, daß** in den Eintritts- und Austrittsabschnitten des Schutzschaltungsbauteils (1) Kunststoff-, Schutz- und leitfähige Schaufelgruppen (K) vorgesehen sind.

5. Austrittskasten nach Anspruch 4, **dadurch gekennzeichnet, daß** die Klinkengruppe (K) folgendes aufweist:
- leitende Klemmen (K1), die in der Schutzschaltungskomponente (1) verbunden sind,
- Kontaktanschlüsse (K2) kontaktieren, die in den Brückenkontakt 2s (M4) der Brückenkontaktgruppe (M) eingreifen.

6. Austrittskasten nach Anspruch 1, **dadurch gekennzeichnet, dass**;
Eine Kunststoffschutzgruppe (P), die den Brückenkontakt 1s (M3) und den zu der Brückenkontaktgruppe (M) gehörenden Brückenkontakt 2s (M4) von der Außenumgebung trennt.

7. Austrittskasten nach Anspruch 6, **dadurch gekennzeichnet, daß** er
Auf der Kunststoffschutzgruppe (P) ausgebildete Kunststoffbegrenzungselemente (P1, P2) aufweist.

8. Austrittskasten nach Anspruch 1, **dadurch gekennzeichnet, daß** der Brückengriff (H2) eine Kabel ist.

9. Austrittskasten nach Anspruch 1, **dadurch gekennzeichnet, daß** die leitfähigen Anschlüsse (H1) eine männliche oder weibliche Struktur aufweisen.

10. Austrittskasten nach Anspruch 1, **dadurch gekennzeichnet, daß** die Brückenkontakte (M3) eine männliche oder weibliche Struktur aufweisen.

## Revendications

1. Une boîte de sortie pardonnant le courant de sortie à travers le point d'alimentation d'un système de distribution électrique qui comprend:
- un module de distribution (5) avec barre omnibus,
- une barre omnibus conductrice (6) disposée sur le module de distribution (5) avec barre omnibus,
La boîte de sortie comprend: - un corps de boîte de sortie (2),
- un couvercle de boîte de sortie (3) relié au corps de boîte de sortie (2) de manière à pouvoir être ouvert / fermé,
- un contact de dessin actuel (7) tirant courant de la barre omnibus conductrice (6)
- un composant de circuit de protection (1) qui est utilisé pour déconnecter ou séparer le circuit, ou fournir une protection thermique contre les courants de court-circuit,
La boîte de sortie **caractérisée en ce qu'**elle comprend:
- deux groupes de contact de pont (M) comprenant chacun;
• une borne électrique (M1) où les câbles et les conducteurs arrivant aux sections d'entrée et de sortie du composant de circuit de protection (1) sont engagés à la place du composant de circuit de protection (1) lui-même,
• un contact de pont 1 (M3) configuré pour être engagé par les bornes conductrices (H1) d'un groupe parallèle (H)
• un contact de pont 2 (M4) où les bornes de connexion de contact (K2) d'un groupe de lames (K) du composant de circuit de protection (1) sont connectées.
- un groupe en parallèle (H) configuré pour être connecté aux groupes de contacts de pont (M) lors du remplacement du composant de circuit de protection (1) et pour recevoir le courant principal
Afin de ne pas couper le courant et comprenant une poignée de pont (H2) et des bornes conductrices (H1) configurées dans les parties d'extrémité de la poignée de pont (H2).

2. Boîte de sortie selon la revendication 1, **caractérisée en ce qu'**il comprend un conducteur (H3) intégré dans la poignée de pont (H2) et un fusible (H4) intégré dans la poignée de pont (H2).

3. Boîte de sortie selon la revendication 1, **caractérisée en ce qu'**elle comprend un témoin lumineux (H5) qui est intégré dans la poignée du pont (H2) et indique que le courant s'écoule sur la poignée du pont (H2).

4. Boîte de sortie selon la revendication 1, **caractérisée en ce qu'**il comprend des groupes de lame (K) en matière plastique, protectrice et conductrice montés dans les sections d'entrée et de sortie du composant de circuit de protection (1).

5. Boîte de sortie selon la revendication 4, **caractérisée en ce que** le groupe de lames (K) comprend
- bornes conductrices (K1) connectées dans le composant de circuit de protection (1),
- connecter les bornes de connexion (K2) engagées dans le contact de pont 2s (M4) du groupe de contact du pont (M).

6. Boîte de sortie selon la revendication 1, **caractérisée en ce qu'**elle comprend
- un groupe de protection en plastique (P) isolant le contact de pont 1s (M3) et le contact de pont 2s (M4) appartenant au groupe de contact de pont (M), à partir de l'environnement externe.

7. Boîte de sortie selon la revendication 6, **caractérisée en ce qu'**elle comprend
- éléments limitants en matière plastique (P1, P2) configurés sur le groupe de protection en plastique (P).

8. Boîte de sortie selon la revendication 1, **caractérisée en ce que** la poignée de pont (H2) est un câble.

9. Boîte de sortie selon la revendication 1, **caractérisée en ce que** les bornes conductrices (H1) sont de structure mâle ou femelle.

10. Boîte de sortie selon la revendication 1, **caractérisée en ce que** les contacts de pont (M3) ont une structure mâle ou femelle.
